# EUROPÄISCHE PATENTSCHRIFT

(11) **EP 1 517 170 B1**
(45) Veröffentlichungstag und Bekanntmachung des Hinweises auf die Patenterteilung: **03.11.2010**
(21) Anmeldenummer: 04019231.2
(22) Anmeldetag: 12.08.2004
(51) Int. Cl.: G02C 11/06

(54) **An einem Brillenbügel befestigbares Hörhilfegerät**
Hearing aid attachable to a spectacle temple
Prothèse auditive pouvant être montée sur une branche de lunettes

(30) Priorität: 17.09.2003 DE 10343010
(43) Veröffentlichungstag der Anmeldung: 23.03.2005
(73) Patentinhaber: Siemens Audiologische Technik GmbH, 91058 Erlangen (DE)
(72) Erfinder: Bailey, John, RH11 8HZ Crawley (GB)
(74) Vertreter: Maier, Daniel Oliver

(56) Entgegenhaltungen:
- DE-A- 4 333 559
- DE-U- 1 724 439
- US-A- 2 999 136
- US-A- 3 000 462
- US-A- 3 382 327
- US-A- 3 825 700

## Beschreibung

Die Erfindung betrifft ein an einem Brillenbügel befestigbares Hörhilfegerät.

Aus der DE 83 36 526 U1 ist eine Brille mit einem Brillenbügel bekannt. Üblicherweise ist der Brillenbügel als Metallstab ausgebildet, der zur Anpassung an den Brillenträger ein biegbares Brillenbügel-Endstück umfasst. Auch das nadelförmige Brillenbügel-Endstück besteht in der Regel aus einem Metall oder einer Metalllegierung. Um den Tragekomfort zu erhöhen, wird bei einer gewöhnlichen Brille über das Brillenbügel-Endstück eine Hülse geschoben, beispielsweise aus Silikonkautschuk, die das Brillenbügel-Endstück weich ummantelt.

Aus der DE 87 06 344 U1 ist eine Brille mit darin eingebautem Hörgerät bekannt, wobei das Hörgerät in wenigstens zwei Einheiten unterteilt ist. Eine der Einheiten ist in einem Verbindungselement angeordnet, das einen an der Fassung schwenkbar angebrachten Teil eines Bügels mit einem hinter das Ohr greifenden Endstück dieses Bügels verbindet, und die andere Einheit ist in dem Endstück angeordnet. Nachteilig bei der bekannten Hörbrille ist, dass der Brillenbügel zur Verbindung mit dem Hörgerät gekürzt werden muss, wodurch die Brille nur noch in Verbindung mit dem Hörgerät benützt werden kann.

Aus der WO 02/067627 A1 ist ein Hörgerät für den Einbau in einen Seitenbügel einer Brille bekannt. Das Hörgerät ist mit einem elastisch verformbaren, lang gezogenen, dünnen Stift 5 versehen, der als Kern in eine ohrseitige Endpartie der Brille eingeschoben wird, dort eine Versteifung bewirkt und gleichzeitig auch die individuelle trägerbezogene Anpassung ermöglicht.

Aus der US 2,999,136 ist eine Hörbrille bekannt, bei deren Zusammenbau zunächst der hinter das Ohr greifende Teil des Brillenbügels abgetrennt wird. Auf das so gebildete Ende des Brillenbügels wird dann ein Hörgerät mit gebogener Gehäuseform aufgeschoben, das hierfür in seinem vorderen GehäuseBereich von einem Kanal durchzogen ist.

Aufgabe der vorliegenden Erfindung ist es, ein an einem Brillenbügel befestigbares Hörhilfegerät zu schaffen, bei dem die Brille auch nach dem Lösen des Hörhilfegerätes von dem Brillenbügel noch getragen werden kann.

Diese Aufgabe wird bei einem an einem Brillenbügel einer von einem Träger tragbaren Brille befestigbaren Hörhilfegerät mit einen das Hörhilfegerät zumindest teilweise durchziehenden Kanal zur Aufnahme eines biegbaren Brillenbügel-Endstücks gelöst durch ein zumindest in einem Teilbereich biegbares Gehäuse, wobei das Gehäuse und der Kanal so ausgebildet sind, dass das Gehäuse zusammen mit dem in den Kanal eingeführten Brillenbügel-Endstück biegbar ist zur individuellen Anpassung der Form des Hörhilfegerätes an den Träger.

Üblicherweise bestehen Brillenbügel aus einem Metall oder einer Metalllegierung. Zur Anpassung an den jeweiligen Brillenträger ist der im Ohrbereich befindliche Teil des Brillenbügels, das sogenannte Brillenbügel-Endstück, durch Biegen plastisch verformbar. Die Biegung zur Anpassung des Brillenbügels erfolgt in der Regel unter Wärmeeinwirkung.

Um den Tragekomfort zu erhöhen sowie aus kosmetischen Gründen ist auf das Brillenbügel-Endstück ein Kunststoff-Tragekörper aufgeschoben. Dieser ist elastisch und passt sich daher der Biegung des Brillenbügel-Endstücks an.

Mit einem Hörhilfegerät gemäß der Erfindung ist es möglich, aus nahezu jeder handelsüblichen Brille mit dem beschriebenen Aufbau eine Hörbrille herzustellen. Es muss hierfür lediglich der Kunststoff-Tragekörper von dem Brillenbügel-Endstück abgezogen und das Hörhilfegerät gemäß der Erfindung aufgeschoben werden. Innerhalb des Gehäuses des Hörhilfegerätes gemäß der Erfindung ist ein Hohlraum (Kanal) zur Aufnahme des Brillenbügel-Endstücks ausgebildet. In diesen Kanal kann das Brillenbügel-Endstück eingeführt werden, ohne hierzu den Brillenbügel kürzen und damit die Brille beschädigen zu müssen. Zur individuellen Anpassung an den Träger der so gebildeten Hörbrille wird dann das Brillenbügel-Endstück zusammen mit dem Hörhilfegerät in Form gebogen. Das somit in das Gehäuse des Hörhilfegerätes eingeführte Brillenbügel-Endstück dient somit neben der Befestigung des Hörhilfegerätes an der Brille auch zur Formgebung und Versteifung des Hörhilfegeräte-Gehäuses. Das Gehäuse des Hörhilfegerätes kann aus den gleichen Kunststoffen aufgebaut sein, die üblicherweise auch zur Herstellung der Kunststoff-Tragekörper verwendet werden. Sowohl kalt plastisch verformbare als auch unter Wärmeeinwirkung plastisch verformbare (thermoplastische) Kunststoffe sind möglich.

Allein die Biegung des Brillenbügel-Endstücks in dem Hörhilfegerät reicht in der Regel aus, um die Brille und das Hörhilfegerät dauerhaft miteinander zu verbinden. Hörhilfegerät und Brille lassen sich dann auch besonders einfach wieder voneinander lösen, indem das Brillenbügel-Endstück und das Hörhilfegerät wieder gerade gebogen werden.

Die Erfindung bietet den Vorteil, dass zur Herstellung einer Hörbrille auf übliche Brillen zurückgegriffen werden kann. Für den Hörbrillenträger steht daher eine große Auswahl möglicher Brillen in den unterschiedlichsten Designs zur Verfügung. Da zur Verbindung mit einem Hörhilfegerät von der Brille lediglich der Tragekörper abgezogen werden muss, wird die Brille nicht beschädigt und kann daher jederzeit wieder in ihren ursprünglichen Zustand zurück versetzt werden. Es steht dem Hörbrillenträger daher offen, wie beim gewöhnlichen Brillenkauf verschiedene Modelle auszuprobieren, und dies auch bereits bei mit der Brille verbundenem Hörhilfegerät.

Durch die weit fortgeschrittene Miniaturisierung von Hörgeräte-Komponenten ist es möglich, das Hörhilfegerät gemäß der Erfindung so zu gestalten, dass es sich in seiner äußeren Form von einem gewöhnlichen Kunststoff-Tragekörper nur unwesentlich unterscheidet. Insbesondere weist es einen schlanken, biegbaren und von dem biegbaren Brillenbügel-Endstück durchzogenen Mittelbereich auf. Ähnlich der Öffnung eines Kunststoff-Tragekörpers befindet sich auch bei dem Hörhilfegerät im vorderen Bereich eine Öffnung, in die das Brillenbügel-Endstück einführbar ist. Vorzugsweise befindet sich das gesamte Brillenbügel-Endstück eng anliegend innerhalb eines Kanals in dem Hörhilfegerät. Das Brillenbügel-Endstück kann jedoch auch durch mehrere, nicht zusammenhängende, verhältnismäßig kurze Kanalstücke in dem Hörhilfegerät geführt und befestigt sein. Dabei kann die Befestigung auch durch Schraub-, Klemm-, Klebe- oder sonstige Verbindungen des Brillenbügel-Endstücks mit dem Hörhilfegerät verbessert sein.

Eine bevorzugte Ausführungsform der Erfindung sieht vor, dass das Hörhilfegerät gemäß der Erfindung alle Komponenten eines üblichen, hinter dem Ohr tragbaren Hörhilfegerätes umfasst. Es sind dies wenigstens ein Mikrofon zur Aufnahme eines akustischen Eingangssignals und Wandlung in ein elektrisches Signal, eine Signalverarbeitungseinheit zur Verarbeitung und frequenzabhängigen Verstärkung des elektrischen Signals und ein Hörer zur Wandlung des verarbeiteten elektrischen Signals in ein akustisches Signal, das in den Gehörgang des Hörbrillenträgers abgegeben wird. Weiterhin umfasst das Hörhilfegerät gemäß der Erfindung eine als Batterie oder Akku ausgebildete Spannungsquelle.

Zur Schallleitung zwischen dem Hörhilfegerät und dem Ohrkanal ist ein Schallschlauch vorgesehen, der mittels einer Otoplastik im Ohr befestigt ist.

Das Hörhilfegerät gemäß der Erfindung kann jedoch in Teilbereichen auch von dieser bevorzugten Ausführungsform abweichen. Z.B. kann wenigstens ein Mikrofon des Hörhilfegerätes auch außerhalb des Gehäuses, z.B. an dem Brillengestell, angeordnet sein. Ferner ist es beispielsweise möglich, dass der Hörer außerhalb des Gehäuses des Hörhilfegerätes angeordnet ist. So kann der Hörer in der Otoplastik angeordnet und lediglich über Signalleitungen mit dem Hörhilfegerät verbunden sein.

Bei einer weiteren Ausführungsform ist vorgesehen, dass lediglich ein Gehäuseende gegenüber dem schlanken Mittelbereich vergrößert ist. Z.B. kann der vordere Bereich des Gehäuses mit der Kanalöffnung zum Einführen des Brillenbügel-Endstücks ebenfalls sehr schlank ausgeführt sein, insbesondere wenn in diesem Teilbereich keine weiteren Hörhilfegeräte-Komponenten untergebracht sind.

Die Erfindung wird nachfolgend anhand eines Ausführungsbeispiels näher erläutert. Es zeigen:
Figur 1 ein Brillengestell sowie ein Hörhilfegerät gemäß der Erfindung und
Figur 2 die Brille gemäß Figur 1 mit aufgestecktem und gebogenem Hörhilfegerät.

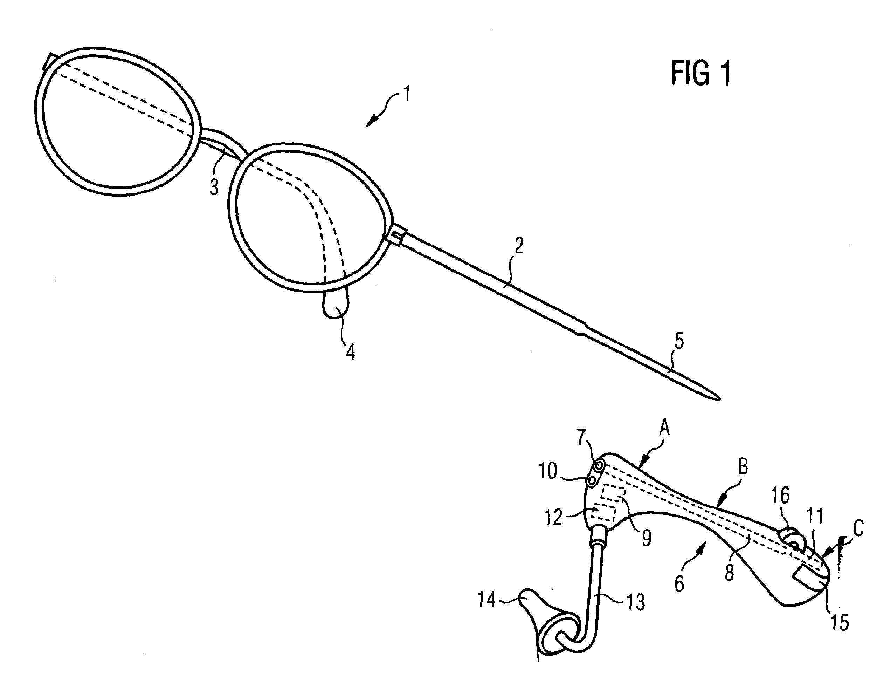

Figur 1 zeigt eine handelsübliche Brille 1 mit einem linken Brillenbügel 2 und einem rechten Brillenbügel 3. Am hinteren Ende des rechten Brillenbügels 3 ist in üblicher Weise ein Tragekörper 4 aus Kunststoff aufgeschoben. Der Tragekörper 4 ist gegenüber dem vorderen Teil des Brillenbügels 3 gebogen, so dass der rechte Brillenbügel 3 bei getragener Brille hinter das Ohr greift und die Brille hält. Im Unterschied zum rechten Brillenbügel 3 ist an dem linken Brillenbügel 2 der Tragekörper entfernt, wodurch das metallene biegbare Brillenbügel-Endstück 5 sichtbar wird.

Figur 1 zeigt ferner ein Hörhilfegerät 6 gemäß der Erfindung. Das Gehäuse des Hörhilfegerätes 6 weist einen verhältnismäßig schlanken Mittelbereich B und einen im Verhältnis zu diesem vergrößerten vorderen Bereich A mit einer Kanalöffnung 7 auf, in die zur Befestigung des Hörhilfegerätes 6 mit der Brille 1 das Brillenbügel-Endstück 5 geschoben werden kann. Zur Aufnahme des Brillenbügel-Endstücks 5 ist das Hörhilfegerät 6 von einem entsprechend dimensionierten Kanal 8 durchzogen. Alternativ könnte der Kanal 8 auch aus einem Hohlraum innerhalb des Hörhilfegerätes und einem kurzen, an dem Brillenbügel-Endstück eng anliegenden Kanalstück bestehen, das zur Führung und Befestigung des Brillenbügel-Endstücks dient. Durch das langgestreckte und schlanke, innen hohle Gehäuse des Hörhilfegerätes 6 ist im Inneren ohnehin eine Art "Kanal" ausbildet.

Das Hörhilfegerät 6 gemäß dem Ausführungsbeispiel umfasst weiterhin ein Mikrofon 9 mit einer Schalleinlassöffnung 10 zur Aufnahme eines akustischen Eingangssignals und Wandlung in ein elektrisches Signal. In einer Signalverarbeitungseinheit 11 erfolgt die Verarbeitung und frequenzabhängige Verstärkung des elektrischen Signals. Ein Hörer 12 wandelt das verarbeitete elektrische Signal zurück in ein akustisches Signal, welches über einen Schallschlauch 13 und eine Otoplastik 14 in den Gehörgang eines Hörhilfegeräteträgers geleitet wird. Zur Spannungsversorgung des Hörhilfegerätes 6 dient eine Batterie, die sich in einem Batteriefach 15 befindet. Weiterhin kann über einen Lautstärkesteller 16 die Lautstärke eingestellt oder das Hörhilfegerät 6 ausgeschaltet werden.

Zumindest der Mittelbereich B des Hörhilfegerätes 6 ist aus einem plastisch verformbaren Material gefertigt, z.B. aus Silikonkautschuk, so dass das Gehäuse in diesem Bereich gemäß den individuellen Anforderungen des Hörbrillenträgers gebogen werden kann.

Wie aus Figur 1 ersichtlich ist, befinden sich die zur Funktion des Hörhilfegerätes 6 wesentlichen Komponenten (Mikrofon 9, Hörer 12, Signalverarbeitungseinheit 11, Batteriefach 15) im vorderen Teilbereich A bzw. im hinteren Teilbereich C des Hörhilfegerätes 6. Im Mittelbereich B befinden sich daher neben dem Kanal 8 lediglich Verbindungsleitungen zwischen den einzelnen Hörhilfegeräte-Komponenten, wodurch das Gehäuse in diesem Bereich gegenüber dem vergrößerten vorderen Bereich A bzw. dem vergrößerten hinteren Bereich C entsprechend schlank ausgeführt werden kann.

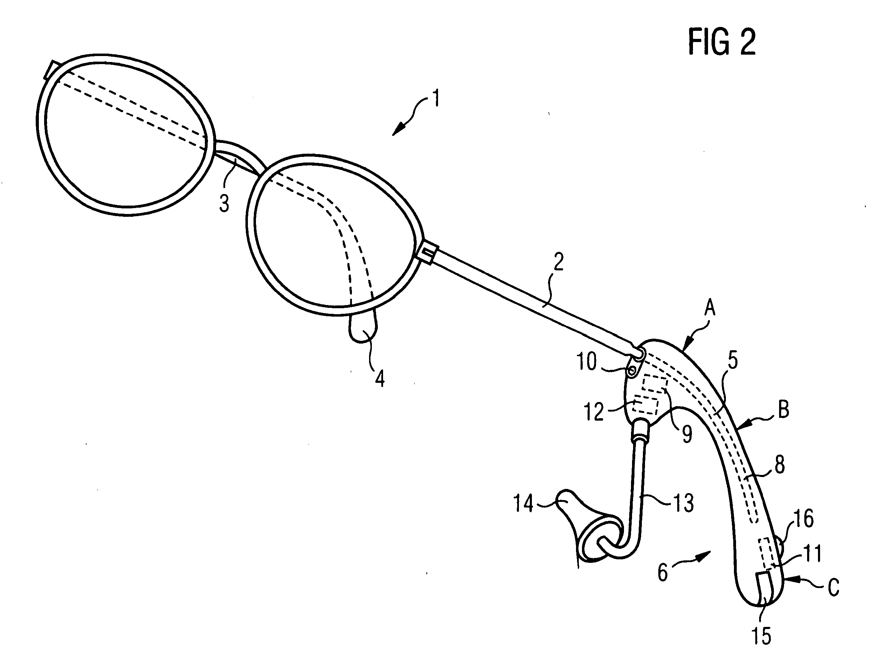

Figur 2 zeigt die Brille 1 gemäß Figur 1 mit dem daran befestigten Hörhilfegerät 6. Bezeichnung und Funktion der einzelnen Komponenten entsprechen der Bezeichnung und Funktion gemäß Figur 1. Im Unterschied zu Figur 1 zeigt das Gehäuse des Hörhilfegerätes 6 nun jedoch nicht mehr die langgestreckte Form wie in Figur 1, sondern das Gehäuse ist insbesondere im Mittelbereich B gebogen, so dass das Hörhilfegerät 6 an dem linken Brillenbügel 2 die gleiche Funktion (halten der Brille) wie der Tragekörper 4 an dem rechten Brillenbügel 3 übernimmt. Die Anordnung der Komponenten des Hörhilfegerätes 6, wie sie in den Figuren 1 und 2 veranschaulicht ist, hat den Vorteil, dass der Mittelbereich B zum Biegen des Brillenbügel-Endstücks sogar erwärmt werden kann. Auch das innerhalb des Gehäuses befindliche Brillenbügel-Endstück trägt dazu bei, dass das Hörhilfegerät 6 nach der Verformung seine Form dauerhaft (oder ggf. bis zu einer erneuten Anpassung) beibehält.

Die Erfindung bietet den Vorteil, dass zur Herstellung einer Hörbrille eine handelsübliche Brille 1 verwendet werden kann, die durch die Herstellung der Hörbrille nicht beschädigt wird. Der Hörbrillenträger hat daher die Möglichkeit, verschiedene Brillen auszuprobieren und die Brille 1 nach dem Lösen des Hörhilfegerätes 6 wieder in ihren ursprünglichen Zustand (mit Tragekörpern an beiden Brillenbügel-Endstücken) zurückzuversetzen.

Die Hörbrille ist nicht auf das dargestellte Design beschränkt. Sowohl bei der Brille als auch bei dem Hörhilfegerät sind viele Variationsmöglichkeiten denkbar. Selbstverständlich kann die Hörbrille auch mit zwei Hörhilfegeräten gemäß der Erfindung (je eine am linken und am rechten Brillenbügel) zur binauralen Versorgung ausgestattet sein.

## Patentansprüche

1. An einem Brillenbügel (2) einer von einem Träger tragbaren Brille befestigbares Hörhilfegerät (6) mit einem das Hörhilfegerät (6) zumindest teilweise durchziehenden Kanal (8) zur Aufnahme eines biegbaren Brillenbügel-Endstücks (5), **gekennzeichnet durch** ein zumindest in einem Teilbereich (B) biegbares Gehäuse, wobei das Gehäuse und der Kanal (8) so ausgebildet sind, dass **ein metallenes Brillenbügel-Endstück (5) einer handelsüblichen Brille, bei der ein das Brillenbügel-Endstück (5) ummantelnder Tragekörper entfernt wurde,** in den Kanal (8) einführbar und zusammen mit dem Gehäuse biegbar ist zur individuellen Anpassung der Form des Hörhilfegerätes (6) an den Träger.

2. Hörhilfegerät (6) nach Anspruch 1, **gekennzeichnet durch** einen schlanken, biegbaren Mittelbereich (B) und einen im Vergleich zu diesem vergrößerten vorderen Bereich (A) mit einer Kanalöffnung (7), in die das Brillenbügel-Endstück (5) einführbar ist.

3. Hörhilfegerät (6) nach Anspruch 1 oder 2, **dadurch gekennzeichnet, dass** in dem vergrößerten vorderen Bereich (A) wenigstens ein Mikrofon (9) zur Aufnahme eines akustischen Eingangssignals angeordnet ist.

4. Hörhilfegerät (6) nach einem der Ansprüche 1 bis 3, **dadurch gekennzeichnet, dass** in dem vergrößerten vorderen Bereich (A) wenigstens ein Hörer (12) zur Abgabe eines akustischen Ausgangssignals angeordnet ist.

5. Hörhilfegerät (6) nach einem der Ansprüche 1 bis 4, **gekennzeichnet durch** einen im Vergleich zu dem schlanken, biegbaren Mittelbereich (B) vergrößerten hinteren Bereich (C), in dem eine Spannungsquelle angeordnet ist.

6. Hörhilfegerät (6) nach einem der Ansprüche 1 bis 5, **gekennzeichnet durch** ein zumindest in dem Mittelbereich (B) aus einem thermoplastischen Kunststoff gebildetes Gehäuse.

## Claims

1. Hearing aid (6) which can be secured on a spectacle bow (2) of spectacles that can be worn by a wearer, with a channel (8) that extends at least partially through the hearing aid (6) and receives a bendable spectacle bow endpiece (5), **characterized by** a housing that is bendable at least in a subarea (B), wherein the housing and the channel (8) are designed in such a way that a metal spectacle bow endpiece (5) of conventional spectacles, in which a support body enclosing the spectacle bow endpiece (5) has been removed, can be inserted into the channel (8) and can be bent together with the housing for individually adapting the shape of the hearing aid (6) to the wearer.

2. Hearing aid (6) according to Claim 1, **characterized by** a slender, bendable middle area (B) and a front area (A) which is enlarged compared to the middle area (B) and which has a channel opening (7) into which the spectacle bow endpiece (5) can be inserted.

3. Hearing aid (6) according to Claim 1 or 2, **characterized in that** at least one microphone (9) for receiving an acoustic input signal is arranged in the enlarged front area (A).

4. Hearing aid (6) according to one of Claims 1 to 3, **characterized in that** at least one earphone (12) for emitting an acoustic output signal is arranged in the enlarged front area (A).

5. Hearing aid (6) according to one of Claims 1 to 4, **characterized by** a rear area (C) which is enlarged compared to the slender, bendable middle area (B) and in which a voltage source is arranged.

6. Hearing aid (6) according to one of Claims 1 to 5, **characterized by** a housing made of a thermoplastic at least in the middle area (B).

## Revendications

1. Prothèse ( 6 ) auditive pouvant être fixée à une branche ( 2 ) de lunettes pouvant être portée par un porteur, comprenant un canal ( 8 ) qui traverse au moins en partie la prothèse ( 6 ) auditive et qui est destiné à la réception d'un embout ( 5 ) pouvant être courbé de la branche de lunettes, **caractérisée par** un boîtier pouvant être courbé dans au moins une sous région ( 2 ), le boîtier et le canal ( 8 ) étant constitués de manière à ce qu'un embout ( 5 ) métallique d'une branche de lunettes habituelles, dans lesquelles un corps support entourant l'embout ( 5 ) a été enlevé, peut être introduit dans le canal ( 8 ) et peut être courbé ensemble avec le boîtier, pour l'adaptation individuelle de la forme de la prothèse ( 6 ) auditive au porteur.

2. Prothèse ( 6 ) auditive suivant la revendication 1, **caractérisée par** une partie ( B ) médiane ténue et pouvant être courbée et par une partie ( A ) avant, agrandie par rapport à celle-ci et ayant une ouverture ( 7 ) de canal, dans laquelle l'embout ( 5 ) de la branche de lunettes peut être introduit.

3. Prothèse ( 6 ) auditive suivant la revendication 1 ou 2, **caractérisée en ce que** au moins un microphone ( 9 ) de réception d'un signal acoustique d'entrée est disposé dans la partie ( A ) avant agrandie.

4. Prothèse ( 6 ) auditive suivant l'une des revendications 1 à 3, **caractérisée en ce que** au moins un écouteur ( 12 ) d'émission d'un signal acoustique de sortie est disposé dans la partie ( A ) avant agrandie.

5. Prothèse ( 6 ) auditive suivant l'une des revendications 1 à 4, **caractérisée par** une partie ( C ) arrière agrandie par rapport à la partie ( B ) médiane ténue et pouvant être courbée, partie arrière ( C ) dans laquelle est disposée une source de tension.

6. Prothèse ( 6 ) auditive suivant l'une des revendications 1 à 5, **caractérisée par** au moins un boîtier en une matière plastique au moins dans la partie ( B ) médiane.
